# EUROPEAN PATENT APPLICATION

(11) **EP 1 384 705 A1**
(43) Date of publication of application: **28.01.2004**
(21) Application number: 02078663.8
(22) Date of filing: 05.09.2002
(51) Int. Cl.: C05D 9/00, C05G 3/00, A01N 25/00

(54) **Method to increase the well-being of plants by homeopathic influence**

(30) Priority: 24.07.2002 EP 02078029
(71) Applicant: Laurens, Jan, 8670 Koksijde (BE)
(72) Inventor: Laurens, Jan, 8670 Koksijde (BE)

(57) **Abstract**

The homeopathic remedies Silicea off. and Silicea marina increase the well-being and health in plants. As such, they enhance the agricultural yield and augment the quality of the crops.

The remedies work via absorption by the plant, and/or via contact with the plant. Both ways of administration of the remedies, namely the absorption and the contact, apply to all the parts of the plant; the roots, the stem and the leaves.

## Description

The invention relates to the increase of the well-being of plants by the use of the homeopathic remedies Silicea officinalis and Silicea marina.

### State of the art

- Activation of the soil by mineral homeopathic remedies, mentioned in DE 197 17 425 A 1, by Mr Ullrich, Manfred A . Increase of fertility of the potting compost and soil by remedies brought into the ground in an aqueous solution. D4,D6,D12 used.A specific combination of 18 remedies is used,acidum silic. mentioned.
- A treatment against Fusarium Oxysporum by a homeopathic iso-treatment,called vaccination, as demonstrated by Mr Macchia Christian in the application for a FR patent n° 73 28135.
- A combination of material medication and homeopathic medication in order to obtain better efficiency in allopathic treatments , as demonstrated in the demand for patent by Mr Castel Hervé, under n° FR 2 744 635- Al.Also applicable to the vegetable kingdom.
- Application of halogenoacetic acids in homeopathic dosage also applicable in the animal kingdom, as demonstrated in the demand for an EP patent n° 0 060 195 by Mr Le Foll ,Jean.

The invention concerns the increase of the well-being of plants by application of the homeopathic remedies ***Silicea officinalis*** and ***Silicea marina,*** applied as well to the roots, as to the aerial part of the plant.

The **effects** of the mentioned method consist in:
**1°) in general: the reduction of the effects of**
   a) **arid soil** (little fertile soil)
   b) **lack of (surrounding) light**
   c) **competition** between the plants (density of the plantation)
**2°) in detail: the reduction of**
   a) the **physical weakness** of the plant, in its entirety .
      Through reduction of the weakness, there is an increase in strength.
   b) the **weakness of growth** of the plant in its entirety , of the aerial part, as welll of the roots.
      The reduction of the weakness the growth gives an increase of growth.
   c) the **lack of green** coloration of the leaves .
      Through reduction of the lack of formation of chlorophyl, there is an increase of green coloration.
   d) the **slowness of maturing ( ripening )** of the plant or fruit.
      Through reduction of the slowness of ripening (maturing)there is an enhancement of maturation.
   e) the **defeciency in aroma**, and taste.
      Through a reduction of the lack of formation of aroma, there is an increase of it.
   f) the **hampered health** status.
      Results in a better health-situation of the plant.
   g) the tendency to **shoot up**.
   h) weakness in **flowering**.
      Through a reduction in the weakness of flowering of fruit-trees, there is an increase of flowering.

These effects result in an increase in yield and also in quality of the crops.

### The remedy used: Silicea officinalis and Silicea marina

"Silicea officinalis" is the name of the homeopathic preparation of SiO2, also called Silica, Silex, or Silicic anhydride.

"Silicea marina" is the name of the homeopathic preparation of sea-sand, in which Silica is the main component.

There is no obvious difference between Silicea marina and Silicea officinalis. The most used in the experiments is Silicea officinalis.

### Dilution used

The dilutions from 3K up to 105K are globally the most effective, but higher dilutions can also be used.

The best results were obtained with the **105th dilution of Korsakov** (called 105K).

The dilution, or the type of dynamisation (for example Korsakoff, Hahnemann,..), or the intensity of the remedy are only of importance in this way:
the differences between the dilutions of homeopathic preparations show themselves in the evolution of the effects, this, while the plant is growing.

The different dilutions do not change however the quality of the effects .

### For example:

A dilution lower than 105K will have more immediate, but less durable effects.

A dilution higher than 105K will have first of all effects of aggravation of the situation ,and then a durable improvement.

Ultimately the effects of each type of homeopathic preparation are qualitatively identical, but will be achieved along a different evolution.

### Preparation of the homeopathic remedy

As first described by Hahnemann, the insoluble silica is made soluble by grinding the silica to fine dust,and then dilute it in water,or some other solvens, and shake it intensely .

Consecutive ***dilutions*** are made by taking 1 part of the solution and dilute this one part into 99 parts of solvens, and shake it again.

In case of the Hahnemann dilutions: 1 part is taken from the original solution, and diluted into 99 parts of solvens, and shaken by hand ,for one hundred times. This gives the first dilution of Hahnemann, called 1 CH. (first centesimal dilution of Hahnemann).

The consecutive dilutions, each time 1 part from the previous diltution into 99 parts of the following solvens, give the following CH dilutions, 2CH,3CH,.... There is a more practical way in producing homeopathic dilutions, that was described by Korsakoff.(In short it is a method by which the dilution is produced mechanically, and the parts taken differently from previous dilutions.)

***The intensity*** of the remedy depended originally upon the intensity of shaking the solutions. More recently, it depends upon the amplitude of the electromagnetic signal of the remedy, as produced by the electronic devises.

***The level of interaction*,** on the contrary, depends upon the level of dilution (1CH,2CH,...).

The most accurate description of the remedies however consists in the ***electro-magnetic field-description.***

The remedies have electromagnetic fields that are specific for the originally dissolved substance, and also for the type and intensity of dilution. There exist computers that produce and reproduce the electromagnetic fields of the remedies, and can "charge" substances with these electromagnetic fields.

Most of the remedies used for the experiments were electronically produced.

A few of the remedies used, were the original homeopathic remedies.

Internetaddresses regarding the electronic devices:
http://www.oirf.com/recinstr/elh.htlm
http://www.med-tronik.de/e_produk.htm
http://www.holimed.de/English/brochure0.htm

### The economic importance in agriculture of the use of Silicea officinalis. and Silicea marina

**All plant-species** can be treated by the remedy, as the characteristics that are treated, (see p.2), are proper to all plants.

Increases in yield can go up to as high as 85%, depending upon the concrete conditions of the crops and types of crop, for example : organic or classic agriculture, lettuce or celery,...., fruittrees....

In organic agriculture of green celery we obtained an increase in weight of the celery plants of approximately 60%.

With organically grown pear-trees, an increase in productivity of pears of 85% was proven.

### The remedy practically applied:

There are **three ways** to apply the remedy.

The three different applications all produce the same effects.

### 1°) The remedy touches (or approaches) the leaves or the stem (aerial part) of the plant

1.1) This was done by putting the remedy in tubes (for example PVC-tubes), seal off both ends of the tubes, and make the tubes touch the plants, or approach them without touching.
   They were left in place during the whole growing season.
1.2) This was done by "loading" the remedy electronically on a solid carrier, such as: clay, CaCO3, lava, or artificial and organic fertilizers.
   This carrier was then brought in touch with the plants, or have it closely approach them.
1.3) This was done by "loading" ,electronically, aluminum-foil with the remedy and bring it close to the plants or in touch with them.

### 2°) The remedy touches or approaches the roots of the plant

This method consists in bringing the remedy on variuos **carriers**, and then work these into the soil by means of ploughing, or bring them in the ground on the moment of planting.

The remedy can thus exercise its influence during the whole growing season.

For example:
2.1) Saturation of the carrier "Sepiolite" with the aqueous remedy. Sepiolite is a lightweight porous clay, (chemically a hydrated magnesium silicate).
   This carrier is then worked ( loaded with the remedy), into the ground. In this way the remedy is brought close to or in touch with the roots of the plants.
2.2) Bringing the information of the remedy by electronic means on a solid carrier {for example atalpugite ( a clay ), or lava, or CaCO3}, and work this carrier into the soil .
   Evaporation of the remedy is thus avoided.
   Artificial and organic fertilizers can in this way be charged with the remedies.

These kinds of applications are appropiate to industrial cultures.

### 3°) The plant absorbs the remedy

3.1) Is done by moisturing or watering the plants with the aqueous remedy, during the whole growing season.
   This approach is practical for greenhouse-cultures or for cultures on small scale ( home, gardens, etc..).
   Because of loss of remedy due to evaporation by the plant (and by the soil) efficiency diminishes.
3.2)The application in the soil of "charged" fertilizer also makes the plant absorb the remedy, without any evaporation.
   The plants absorb the constituents of the fertilizer that are "charged" electronically with the remedy.

### Experiment 1

### Lettuce biologically grown

Lettuce of the type "Pontiac" was planted 4 times and harvested 4 times, during the the four seasons of the year 2000.

The lettuce was grown biologically, without the use of pesticides, or artificial fertilization.

75 plants were treated each season

### The treatment applied:

The remedies that were used were Silicea officinalis and Silicea marina, each one in the dilution "6K".

The intensity of both the remedies had been increased 60 times ,electronically. Each morning, 10 liter of water with 10 ml of the remedy added, were given to 75 plants.

The amount of water that was given varied with the weather-conditions: during rainy days no water was given.

The remedies were alternated for the consecutive crops: the remedy for the first crop was Silicea marina, for the second crop Silicea off., for the third crop Silicea marina, for the fourth crop Silicea off..

### The results of this experiment:

The all-over results showed that the non-treated lettuce weighed **410g**, the treated plants weighed **515g**,

This adds to an increase of **105g**/plant at the moment of harvest. ***=25% weight - increase.***

There was no difference shown between the results of the use of Silicea officinalis or of the use of Silicea marina.

### Remarks about the treated plants:

It was observed that the treated plants had thicker leaves and had a darker green colour.

The treated plants were also 1 week earlier ripe and could be ***harvested one week earlier (3 weeks maturing) than the non- treated plants (4 weeks after planting-over in their definitive place), because of faster maturing.***

The overall health-status was better and less parasites were present.

### Experiment 2

### Lettuce grown in classic agriculture

The type of lettuce that was treated was "Lollabionda" and "Lollarossa".

The type of agriculture utilized for this experiment was the classic greenhouse culture: - heated and watered artificially,
- artificial and organic fertilization used,
- and the anti-fungus treatment, called "Previcur N", was applied.

The homeopathic treatment was added to the classic treatment, without any change to the classic treatment.

The lettuce was planted in the first week of Februari 2002, and harvested in the second week of April 2002.

The number of plants that received treatment equalled to 6.000.

The number of control plants: 4.000.

### The treatment used in this experiment:

The remedy was an addition of dilutions of Silicea officinalis:
- Silicea off. 6K,increased, electronically, in intensity 22.000 times
- Silicea off. 30K,increased, electronically, in intensity 20.000 times
- Silicea off. 79K,increased, electronically, in intensity 18.000 times
- Silicea off. 105K,increased, electronically, in intensity 16.000 times.

This combination was added to the watering system, at a ratio of 1 liter of remedy/100 liter water each time the plants were watered.

The plants were watered once a week, but this dependent largely upon the weather-conditions.

The homeopathic treatment was only given 75% of the necessary times, due to circumstantial factors.

### Results:

At the moment of harvesting the two kinds of treated lettuce had a meanweight of 426g.

The non-treated plants weighed 364g.

***This shows a weight-increase of the treated plants of 17%.***

After removing the leaves that were not healthy, it was notified that the mean weight of the treated plants was 377g.

The mean weight of the non-treated plants was 314g.

***This shows a weight-increase due to the application of this method of 20%.***

### Experiment 3

### Green celery grown in biological agriculture

The green celery of the type "Tango", was planted on the open field.

The type of agriculture was officially controlled biologic agriculture.

The official organism "Ecocert" certified the biological means of agriculture. The celery was planted on the 5th May 2001 and was harvested on 10th August 2001.

Four separate fields of 120 plants each, were given the remedy.

The total number of plants that thus received treatment : 480 .

### The treatment:

The treatment consisted in the application of Silicea officinalis 105K.

The remedy had been increased in intensity 500 times , by electronic means. The remedy was given in a ratio of 20 ml remedy added to 10liter of water.

At every 40 plants, 10 liter of water was given, and this was done once every five days.

Remark: in the specific conditions of this crop (dry and warm weather), twice as many times the remedy should have been given in order to obtain a fully charged crop.

### The results:

### 1°Weight:

The mean weight of the treated plants was 478g/piece, compared to the mean weight of the control plants of 382 g/piece.

*This shows a **weight-increase**, by the application of this method, **of 23%**.*

### 2°Shooting up of plants:

There were two types of control-plants used in this experiment:
The first control-plants were the plants in the field which we gave no extra-water.
The second control-plants were the plants which we had given a same amount of ordinary water as the treated ones.

With the first control-plants (which received no extra-water) there was a rate of shooting up of 50%.

With the second control-plants (which received extra-water) there was a rate of shooting up of 70%.

For the treated plants there was a rate of shooting up of 30%.

This shows a ***reduction of 40% of the shooting up-rate*** of the plants treated by this method.

It was noted that the plants showed much better health and vitality, were greener in colour and were physically stronger.

The aroma of the treated plants was much richer than that of the non-treated plants.

### Experiment 4

### Green celery grown in biologic agriculture.

Green celery of the type "Tango" was tested by this experiment. The celery was planted in the open field on 27th May 2001, and was harvested on 25th September 2001.

The farm where we did this experiment applies the Ecocert-certified method of biologic agriculture.

300 celery-plants received the treatment Silicea officinalis.

### The treatment that was applied:

The remedy consisted in an addition of dilutions of Silicea officinalis:
- Silicea off. 6K,increased, electronically, in intensity 22.000 times
- Silicea off. 30K,increased, electronically, in intensity 20.000 times
- Silicea off. 79K,increased, electronically, in intensity 18.000 times
- Silicea off.105K,increased, electronically, in intensity 16.000 times.

**The remedy was applied in this way:**
PVC-tubes were filled with this remedy and sealed off.
The tubes were put on the ground, between and close to the plants.
(See scheme 1)

### Technical details of the tubes

Chemically:PVC-tubes.
The external diameter of the tubes: 16 mm.
The wall-thickness of the tubes = 2mm.
The length of each tube = 10m.
The volume of remedy in each tube: 1,1 liter.

The tubes were placed in the first week of August 2001,( 8 weeks after the celery had been planted) and remained there until the time of harvesting, namely 25 September 2001.

In total 5 tubes, each one 10 meters in length, were placed in the open field and were put close to or were touching the plants.

The total length of the tubes applied equalled 50 meter.

As 6 plants had been planted per meter, 300 plants came in touch with the tubes. A distance of 2mm (=thickness of the wall of the tubes) up to 10 mm (if the tubes did not touch the stems) separated the remedy from the stem of the plants. Seperate control-plants had been given similar tubes, filled with ordinary water.

### The results of this experiment:

### 1 °) Weight-increase

The non-treated or control-plants had a mean weight of 598g/piece.

The treated plants had a mean weight of 948g/piece.

This shows a ***weight-increase*** by the treatment of 59%.

### 2°)Harvest

The plants could be harvested three weeks earlier than the non-treated.,

There had been *a **faster ripening*** of the plants.

### 3°)The health-status was much better than the non-treated celery.

The celery was physically stronger and was darker green.

The treated celery had much more flavor and aroma than the non-treated.

### Experiment 5

### Pear-trees in biologic conditions

The test was done on pear-trees of the variety " Louise Bonne d'Avranche" . The trees grew in biologic growth-conditions. The trees were 8 years of age on the beginning of the experiment.

The experiment took place during the years 2000 and 2001.

The pears were picked respectively on 19th September 2000 and on 19th September 2001.

### The remedy used in this experiment:

The remedy used in the experiment was an addition of dilutions of Silicea officimlis:
- Silicea off. 6K,increased, electronically, in intensity 20.000 times
- Silicea off. 30K,increased, electronically, in intensity 18.000 times
- Silicea off. 79K,increased, electronically, in intensity 16.000 times
- Silicea off 105K,increased, electronically, in intensity 14.000 times.

The remedy was put in a tube and was circled around the stems of the trees and left there during the two years the experiment was conducted.

Each tube contained 100 ml of remedy. The tube was sealed off entirely.

### The results of this test:

It was observed that there was an ***increase in number of flowers by 50%.***

The number of pears harvested from the treated trees amounted to 110.

The number of pears harvested from the control trees amounted to 85.

There was, due to the treatment, an average ***increase in the number of pears*** harvested ***of 30%.***

The mean weight of the treated pears equalled 123g.

The mean weight of the control pears equalled 79g.

This shows an ***increase in weight*** ***of the*** ***pears****,* due to the treatment, ***of 55%.***

There was thus an ***increase of total production (number + weight) of 85%****.*

### Comment in general:

It was observed that the trees showed a ***better heafth-status:*** they had darker green leaves, and grew more vigorously .

It was also noted that the pears were much *more* ***tasty and had more flavour.***

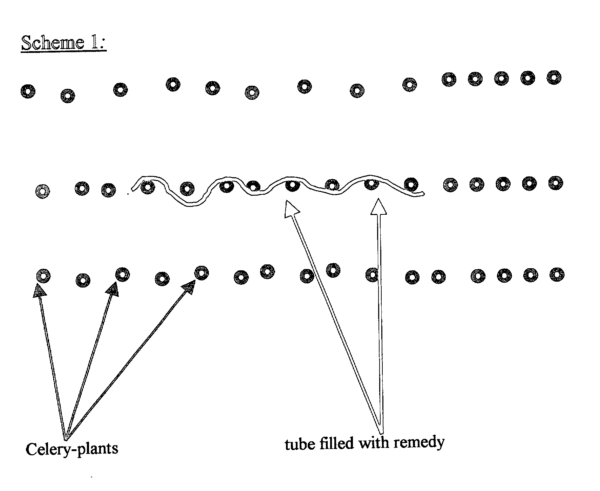

## Claims

1. Method to increase the well-being of plants by the homeopathic remedies Silicea officinalis or Silicea marina.

2. Method to increase the well-being of plants by the homeopathic remedy Silicea officinalis.

3. Method to increase the well-being of plants by the homeopathic remedy Silicea marina.

4. Method to increase the well-being of plants by the homeopathic remedy Silicea officinalis in contact with the plants.

5. Method to increase the well-being of plants by the homeopathic remedy Silicea marina in contact with the plants.

6. Method to increase the well-being of plants by the homeopathic remedy Silicea officinalis absorbed by the plants.

7. Method to increase the well-being of plants by the homeopathic remedy Silicea marina absorbed by the plants.

8. Method to increase the well-being of plants by the homeopathic remedy Silicea officinalis as referred to in claims 2°,4°,6°, in the range of dilutions from 3K up to 105K.

9. Method to increase the well-being of plants by the homeopathic remedy Silicea marina as referred to in claims 3°,5°,7°, in the range of dilutions from 3K up to 105K.

10. Method to increase the well-being of plants by the homeopathic remedy Silicea officinalis as referred to in claims 2°,4°,6°, in the dilution 105K.

11. Method to increase the well-being of plants by the homeopathic remedy Silicea marina as referred to in claims 3°,5°,7°, in the dilution 105K.

12. The use of the method as described in claims 1° to 11° for the improvement of the well-being of plants.

13. The use of the method as described in claims 1° to 11° for the improvement of the well-being of plants, in casu for increase in growth.

14. The use of the method as described in claims 1° to 12° for the improvement of the well-being of plants, in casu for increase in weight.

15. The use of the method as described in claims 1° to 12° for the improvement of the well-being of plants, in casu for increase in aroma.

16. The use of the method as described in claims 1° to 12° for the improvement of the well-being of plants, in casu for acceleration of maturation.

17. The use of the method as described in claims 1° to 12° for the improvement of the well-being of plants, in casu for increase in fruit-production.
